# EUROPÄISCHE PATENTANMELDUNG

(11) **EP 1 921 331 A2**
(43) Veröffentlichungstag der Anmeldung: **14.05.2008**
(21) Anmeldenummer: 07113210.4
(22) Anmeldetag: 26.07.2007
(51) Int. Cl.: F16C 13/00, D21G 1/02

(54) **Durchbiegungseinstellwalze**

(30) Priorität: 07.11.2006 DE 102006052323
(71) Anmelder: Voith Patent GmbH, 89522 Heidenheim (DE)
(72) Erfinder: Dr. van Haag, Rolf, 47647, Kerken (DE)

(57) **Zusammenfassung**

Es wird eine Durchbiegungseinstellwalze (1) angegeben mit einem umlaufenden Walzenmantel (2), einem den Walzenmantel (2) durchsetzenden undrehbaren Joch (4) und mindestens einem Stützelement (5) zwischen dem Joch (4) und dem Walzenmantel (2), das vom Druck in einem Druckraum (10) beaufschlagt ist, der über eine Drosselanordnung (13) mit einer Zuführleitung (12) verbunden ist.

Man möchte die Schwingungsdämpfung einer derartigen Walze verbessern.

Hierzu ist vorgesehen, daß der Druckraum (10) im Bereich seiner in Schwerkraftrichtung höchsten Stelle (16, 20) mit einem Entlüftungskanal (15, 19) verbunden ist.

## Beschreibung

Die Erfindung betrifft eine Durchbiegungseinstellwalze mit einem umlaufenden Walzenmantel, einem den Walzenmantel durchsetzenden, undrehbaren Joch und mindestens einem Stützelement zwischen dem Joch und dem Mantel, das vom Druck in einem Druckraum beaufschlagt ist, der über eine Drosselanordnung mit einer Zuführleitung verbunden ist.

Eine derartige Durchbiegungseinstellwalze ist beispielsweise aus DE 38 02 234 A1 bekannt. Das Stützelement wird im Betrieb unter einem gewissen Druck von innen gegen den Walzenmantel gedrückt und stützt ihn dadurch ab. Die Berührungsfläche zwischen dem Walzenmantel und dem Stützelement wird im bekannten Fall hydrostatisch geschmiert. Prinzipiell wäre auch eine hydrodynamische Schmierung möglich. Die erforderliche Hydraulikflüssigkeit stammt aus dem Druckraum, in dem der Druck erzeugt wird, der das Stützelement trägt.

Im Betrieb neigt der Walzenmantel einer derartigen Walze zu Schwingungen, die aus verschiedenen Gründen unerwünscht sind. Um diese Schwingungen zu dämpfen, ist die Drosselanordnung vorgesehen. Bei einer Bewegung des Walzenmantels wird das Stützelement, das relativ steif an den Walzenmantel angekoppelt ist, gemeinsam mit dem Walzenmantel bewegt. Dadurch wird das Volumen des Druckraumes verändert. Das im Druckraum befindliche Öl (der Begriff "Öl" wird im Folgenden als Kurzbezeichnung für die verwendete Hydraulikflüssigkeit verwendet) wird über die Drosselanordnung hin und her verdrängt. Die hierzu notwendige Energie wird dem System entzogen. Dadurch werden die Schwingungen gedämpft.

Es hat sich nun gezeigt, daß die Drosselanordnung im bekannten Fall nicht immer zufriedenstellende Ergebnisse zeigt. Niederfrequente Schwingungen lassen sich zwar in ausreichendem Maße dämpfen. Kritisch wird es jedoch, wenn die Frequenzen größer als 200 oder 300 Hz werden. Gerade höhere Frequenzen sind aber Problemfrequenzen, die im Zusammenhang mit dem sogenannten Barringproblem an Kalanderwalzen entstehen.

Der Erfindung liegt die Aufgabe zugrunde, die Schwingungsdämpfung zu verbessern.

Diese Aufgabe wird bei einer Durchbiegungseinstellwalze der eingangs genannten Art dadurch gelöst, daß der Druckraum im Bereich seiner in Schwerkraftrichtung höchsten Stelle mit einem Entlüftungskanal verbunden ist.

Das zwischen Joch und Stützelement eingespannte Ölvolumen mit der Drosselanordnung läßt sich physikalisch als Reihenschaltung einer Feder, einer Masse und eines Dämpfers interpretieren. Die Steifigkeit der Feder ergibt sich durch die Kompressibilität des eingespannten Ölvolumens. Die Masse ist gleich der zu bewegenden Ölmasse und der Dämpfer ergibt sich aus dem Strömungswiderstand der Drosselanordnung. Das Dämpfungssystem muß so ausgelegt werden, daß in einem bestimmten Frequenzbereich der Strömungswiderstand der Drossel möglichst hoch ist, aber dennoch genügend Öl über die Drosselanordnung pulsieren kann. Wenn die Drosselanordnung zu eng ist, dann verhält sich das zwischen Joch und Stützelement eingespannte Ölvolumen überwiegend wie eine Feder. Wenn die Drossel zu weit ist, ist der Strömungswiderstand klein und damit die Dämpfung gering. Da das Ölvolumen zwischen dem Stützelement und der im Joch angeordneten Drosselanordnung aufgrund der Durchbiegung des Jochs im Betrieb und gegebenenfalls dem konstruktiv vorgesehenen Mantelhub eine bestimmte Höhe einnimmt, sind der erzielbaren Dämpfungs-Druck-Amplitude Grenzen gesetzt. Um die Druck-Amplitude steigern zu können, müßte man das Ölvolumen reduzieren, was wiederum auf konstruktive Grenzen stößt.

Eine andere Möglichkeit besteht darin, die Steifigkeit der "Feder" zu vergrößern. Dies ist dann möglich, wenn man die Kompressibilität des Öls verringert. Eine Flüssigkeit wie Öl läßt sich nur im theoretischen Fall nicht komprimieren. In der Praxis befinden sich aber noch geringe Luftanteile im Öl. Dies gilt insbesondere bei niedrigen Systemdrücken, also bei niedrigen Streckenlasten. Trotz aufwendiger Luftabscheider, die im Hydraulikkreislauf vor den zur Druckerzeugung verwendeten Pumpen plaziert werden, bilden sich in der Praxis immer wieder kleinste Lufteinschlüsse zwischen den Stützelementen und dem Joch. Beispielsweise kommen diese Lufteinschlüsse dadurch zustande, daß die Walzen nach dem Öffnen des Nips im drucklosen Zustand Luft aus dem Inneren der Walze unter die Stützelemente einsaugen. Auch montagebedingte Lufteinschlüsse sind schwer zu vermeiden.

Der Entlüftungskanal sorgt nun dafür, daß man diese geringen Lufteinschlüsse praktisch vollständig abführen kann, indem er den Druckraum zwischen dem Stützelement und dem Joch permanent entlüftet. Es entsteht also ein kleiner Bypass-Ölstrom, der im Bereich der höchsten Stelle des Druckraumes beginnt. Bei einer Oberwalze, deren Stützelemente in Schwerkraftrichtung nach unten wirken, befindet sich die höchste Stelle des Druckraums am Boden des Druckraums im Joch. Bei einer Unterwalze befindet sich die in Schwerkraftrichtung höchste Stelle des Druckraums nahe der Position, an der das Stützelement aus dem Joch herausragt.

Der Volumenstrom des Druckkreises wird durch den Bypass-Ölstrom zwar etwas erhöht, was zunächst als Nachteil angesehen werden kann. Da jedoch bei schnell laufenden Walzen mit einer Umfangsgeschwindigkeit von 1200 m/min oder mehr ohnehin ein separater Kühlölstrom erforderlich ist, ist in der Gesamtölbilanz dieser zusätzliche Bypass-Ölstrom nicht störend, das er vom notwendigen Kühlölstrom subtrahiert werden kann.

Dies gilt insbesondere dann, wenn der Entlüftungskanal in einen Zwischenraum zwischen dem Mantel und dem Joch mündet. Das Öl, das aus dem Druckraum austritt, wird also in den Raum befördert, aus dem ohnehin Öl permanent abgefördert werden muß. Die Entsorgung des Bypass-Ölstroms erfordert also keinen zusätzlichen Aufwand. Wenn man den Bypass-Ölstrom aus dem Joch gegen den Walzenmantel richtet, dann trägt dieser Bypass-Ölstrom auch zur Kühlung des Walzenmantels bei.

Vorzugsweise weist der Entlüftungskanal eine Drossel auf. Damit wird gewährleistet, daß der Druck im Druckraum auf gewünschten hohen Werten aufrecht erhalten werden kann, ohne daß die Leistung der zur Druckerzeugung verwendeten Pumpen übermäßig stark ansteigen muß.

Hierbei ist von Vorteil, wenn die Drossel in einem Drosseleinsatz angeordnet ist. Das Joch ist ein relativ großes Teil, bei dem es Schwierigkeiten bereitet, eine Drossel mit der nötigen Feinheit unmittelbar im Joch auszubilden. Wenn man die Drossel in einem Drosseleinsatz ausbildet, dann kann man die Drossel in gewünschter Weise dimensionieren, ohne auf das Joch selbst Rücksicht nehmen zu müssen.

Vorzugsweise ist der Drosseleinsatz im Bereich eines Endes des Entlüftungskanals angeordnet, das vom Druckraum entfernt ist. Hier ist der Entlüftungskanal am besten zugänglich. Man kann die Drossel des Drosseleinsatzes zusätzlich als "Spritzdüse " verwenden, mit der der Ölstrahl gegen die Innenwand des Walzenmantels gerichtet wird.

Bevorzugterweise weist die Drossel einen Drosselwiderstand für Hydraulikflüssigkeit auf, der um einen Faktor im Bereich von 50 bis 250 größer ist als ein Drosselwiderstand der Drosselanordnung für Hydraulikflüssigkeit. Damit wird durch die Reihenschaltung der Drosselanordnung und der Drossel ein Druckteiler erzeugt, der dafür sorgt, daß der Druck im Druckraum ausreichend hoch gehalten werden kann.

Bevorzugterweise ist der Druckraum im Bereich seiner in Schwerkraftrichtung höchsten Stelle mit einem oberen Entlüftungskanal und im Bereich seiner Schwerkraftrichtung tiefsten Stelle mit einem unteren Entlüftungskanal verbunden. Bei dieser Ausgestaltung ist es möglich, die so ausgerüstete Walze sowohl als Oberwalze als auch als Unterwalze in einem Kalander zu verwenden. Man kann sie mit dem Joch und der Wirkrichtung einfach um 180° drehen. In diesem Fall wird die Funktion von oberem und unterem Entlüftungskanal vertauscht. In beiden Arbeitspositionen ist aber sichergestellt, daß der Druckraum permanent entlüftet werden kann.

Vorzugsweise mündet der Entlüftungskanal an einer Position in den Druckraum, an der zwei Begrenzungswände des Druckraums unter einem Winkel zusammentreffen. Die beiden Wände, beispielsweise der Boden und die Umfangswand, bilden dann eine Art Fangeinrichtung für die eingeschlossenen Luftvolumina, mit der die Luft zum Entlüftungskanal geleitet werden kann. Die Entlüftung wird dadurch verbessert.

Vorzugsweise schneidet der Entlüftungskanal eine Nut an, in der eine Dichtung zwischen dem Stützelement und dem Joch angeordnet ist. Der Entlüftungskanal steht dann über die Nut mit dem Druckraum in Verbindung. In der Nut ist zwar noch eine Dichtungsanordnung angeordnet, die den Druckraum zum Zwischenraum zwischen dem Walzenmantel und dem Joch hin abdichtet. Diese Dichtungsanordnung stört jedoch beim Entlüften nicht. Auf der dem Inneren des Jochs zugewandten Innenseite der Dichtungsanordnung kann zumindest die aus dem Öl austretende Luft bis zum Entlüftungskanal gelangen. In vielen Fällen wird auch ein kleiner Ölstrom durch den Zwischenraum fließen können. Die permanente Entlüftung ist dabei in jedem Fall sichergestellt.

Vorzugsweise mündet die Zufuhrleitung außermittig in den Druckraum und der Entlüftungskanal ist der Mündung der Zufuhrleitung benachbart angeordnet. Dies gilt insbesondere dann, wenn der Entlüftungskanal vom Boden des Druckraums ausgeht, also der radialen Innenseite des Druckraums. Ein Großteil der im Öl eingeschlossenen Luft wird mit dem Öl antransportiert, das durch die Drosselanordnung zugeführt wird. Je dichter der Entlüftungskanal an dieser Position mündet, desto schneller wird das Öl entlüftet.

Vorzugsweise weist das Stützelement eine von der Vertikalen abweichende Wirkrichtung auf und ist in einer zylinderförmigen Bohrung im Joch angeordnet, wobei der Entlüftungskanal im Zenit der Bohrung mündet. Wenn der Walzenstapel unter einem Winkel zur Vertikalen geneigt ist, beispielsweise um 45°, dann hat auch das Stützelement eine entsprechende Wirkrichtung. Dementsprechend steht die Bohrung, in der das Stützelement angeordnet ist, entsprechend "schräg". Der Boden der Bohrung, die das Stützelement bei einer Oberwalze aufnimmt, beschreibt dann einen Bogen, der ebenfalls unter einem Winkel von 45° angeordnet ist. Im Scheitelpunkt dieses Bogens kann dann der Entlüftungskanal die Luft aus dem Öl entnehmen.

Die Erfindung wird im folgenden anhand von bevorzugten Ausführungsbeispielen in Verbindung mit der Zeichnung näher beschrieben. Hierin zeigen:
- Fig. 1: einen Ausschnitt aus einer Durchbiegungsein-stellwalze als Oberwalze,
- Fig. 2: die Durchbiegungseinstellwalze aus Fig. 1 als Unterwalze,
- Fig. 3: eine abgewandelte Ausführungsform der Durchbiegungseinstellwalze als Oberwalze und
- Fig. 4: die Durchbiegungseinstellwalze als Unterwalze.

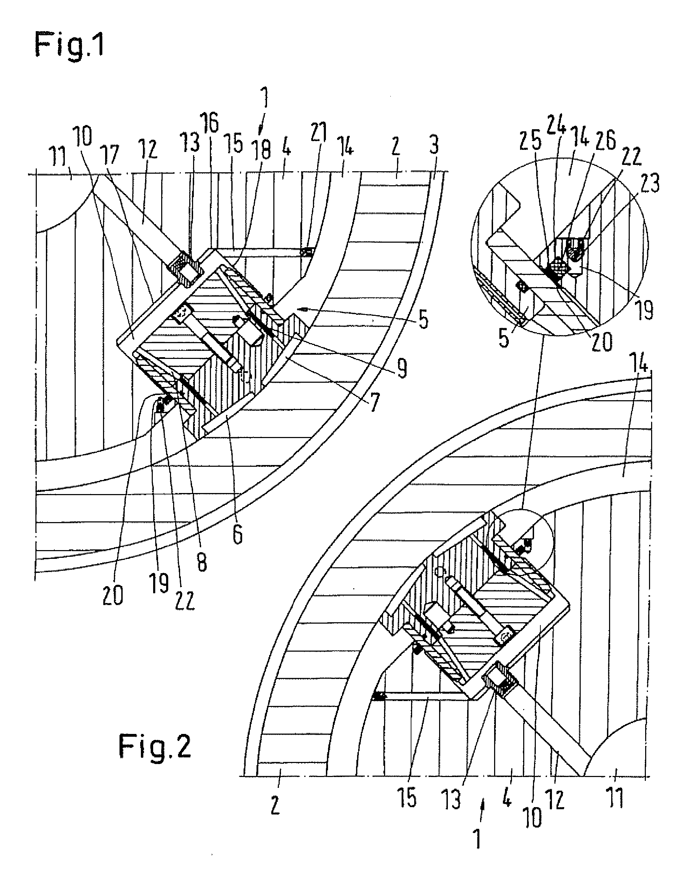

Fig. 1 zeigt ausschnittsweise in schematisierter Darstellung eine Durchbiegungseinstellwalze 1 mit einem Walzenmantel 2, der auf seiner Umfangsfläche einen Kunststoffbezug 3 aufweist. Damit handelt es sich um eine sogenannte weiche Walze. Die Durchbiegungseinstellwalze 1 kann jedoch auch als sogenannte harte Walze ausgebildet sein. In diesem Fall entfällt der Kunststoffbelag.

Der Mantel 2 ist drehbar um ein undrehbar gehaltenes Joch 4 gelagert und gegenüber dem Joch 4 mit Hilfe eines Stützelements 5 abgestützt. Über die axiale Länge der Walze verteilt sind in der Regel mehre Stützelemente angeordnet. Das Stützelement 5 weist an seiner dem Mantel 2 zugewandten Seite mehrere Drucktaschen 6, 7 auf, die über Drosselleitungen 8, 9 mit Hydraulikflüssigkeit unter Druck versorgt werden. Die Hydraulikflüssigkeit wird im folgenden auch kurz als "Öl" bezeichnet.

Das Öl stammt aus einem Druckraum 10 und wird diesem Druckraum 10 über einen Zuführleitung 11 zugeführt, die das Joch 4 in axiale Richtung durchsetzt. Gegebenenfalls können auch mehrere Zuführleitungen 11 vorgesehen sein, um mehrere Stützelemente 5 jeweils einzeln ansteuern zu können. Zwischen der Zuführleitung 11 und dem Druckraum 10 ist ein Zuführkanal 12 angeordnet, der etwa radial verläuft. Im Zuführkanal 12 ist eine Drosselanordnung 13 angeordnet.

Eine derartige Durchbiegungseinstellwalze 1 arbeitet wie folgt:

Das Öl, das durch die Zuführleitung 11 und die Drosselanordnung 13 in den Druckraum 10 gedrückt wird, drückt das Stützelement 5 in Richtung auf den Walzenmantel 2.

Dabei wird Öl durch die Drosselleitungen 8, 9 in die Drucktaschen 6, 7 gefördert, so daß das Stützelement 5 nicht unmittelbar an der Innenseite des Walzenmantels 2 anliegt, sondern sich zwischen dem Stützelement 5 und dem Mantel 2 ein Ölfilm ausbildet. Der Ölfilm wird dadurch gebildet, daß Öl aus den Drucktaschen 6, 7 austritt und über die Ränder des Stützelements 5 in einen Zwischenraum 14 abfließt, der zwischen dem Walzenmantel 2 und dem Joch 4 gebildet ist.

Aufgrund der gewählten Abmessungen kann man davon ausgehen, daß das Stützelement 5 relativ steif an den Walzenmantel 2 angekoppelt ist.

Im Betrieb neigt der Walzenmantel 2 vielfach zu Schwingungen. Diese Schwingungen werden auf das Stützelement 5 übertragen. Eine Schwingungskomponente, die parallel zur Bewegungsrichtung des Stützelements 5 gerichtet ist, bewirkt, daß sich das Stützelement 5 gemeinsam mit dem Walzenmantel 2 bewegt, so daß das Stützelement 5 mit der Schwingungsfrequenz hin und her geschoben wird. Dabei vergrößert und verkleinert sich der Druckraum 10 und das Öl wird über die Drosselanordnung 13 hin und her geschoben. Für die Bewegung des Öls durch die Drosselanordnung 13 ist Energie notwendig, die die Schwingungsenergie vermindert, so daß die Schwingung dadurch gedämpft wird.

Die Schwingungsdämpfung ist dann besonders gut, wenn das im Druckraum 10 eingeschlossene Ölvolumen in einem möglichst geringem Maße kompressibel ist. Um dies zu erreichen, wird der Druckraum 10 permanent entlüftet, so daß die im Öl eingeschlossene Luft laufend entfernt wird. Diese Luft ist ein maßgeblicher Faktor für die Kompressibilität des Öls.

Um die Entlüftung zu bewirken, ist ein Entlüftungskanal 15 vorgesehen, der an der in Schwerkraftrichtung höchsten Stelle 16 beginnt und an einer Umfangsfläche des Jochs 4 in den Zwischenraum 14 mündet. Da der Druckraum 10 zylinderförmig ausgebildet ist, befindet sich die höchste Stelle 16 am Zenit des Bodens 17 des Druckraums und zwar dort, wo der Boden 17 mit der Umfangswand 18 zusammentrifft. Boden 17 und Umfangswand 18 dienen also dazu, kleinste Luftbläschen zu sammeln und dem Entlüftungskanal 15 zuzuleiten.

In der Position, die die in Fig. 1 dargestellte Durchbiegungseinstellwalze 1 annimmt, bildet der Entlüftungskanal 15 einen oberen Entlüftungskanal.

Ferner ist ein unterer Entlüftungskanal 19 vorgesehen, der an der in Schwerkraftrichtung tiefsten Stelle 20 des Druckraums 10 beginnt und ebenfalls in den Zwischenraum 14 zwischen dem Joch 4 und dem Walzenmantel 2 mündet.

Beide Entlüftungskanäle 15, 19 sind im Bereich ihrer Mündung in den Zwischenraum 14 mit einem Drosseleinsatz 21, 22 verschlossen, der eine sehr enge Drosselöffnung 23 (Fig. 2) aufweist, die dem austretenden Öl einen erheblichen Drosselwiderstand entgegensetzt. Der Drosselwiderstand der Drosselöffnung 23 ist 50 bis 250 mal so hoch wie der Drosselwiderstand der Drosselanordnung 13.

Im Betrieb fließt also fortlaufend ein kleiner Anteil von Öl durch den Entlüftungskanal 15 und den Drosseleinsatz 21 ab. Aufgrund des herrschenden Drucks wird dieses Öl gegen die Innenwand des Mantels 2 gespritzt und trägt dabei etwas zur Kühlung des Walzenmantels 2 bei. Dadurch entsteht zwar ein Bypass-Ölstrom, der aufgrund des Drosseleinsatzes 21 aber nur eine vernachlässigbare Größe hat.

Der Entlüftungskanal 15 ist geringfügig zur Horizontalen geneigt, so daß die Mündung in den Zwischenraum 14 in Schwerkraftrichtung höher liegt als die Mündung im Druckraum 10.

Der Zuführkanal 12 mündet außermittig in den Druckraum 10. Die Mündung in den Druckraum 10 ist dabei so angeordnet, daß die der Mündung des Entlüftungskanals 15 in den Druckraum 10 benachbart angeordnet ist. Auf diese Weise muß Luft, die durch den Zuführkanal 12 in den Druckraum 10 eingetragen wird, nur eine kurze Strecke zurücklegen, bevor sie den Entlüftungskanal 15 erreicht.

Man kann die in Fig. 1 als Oberwalze dargestellte Durchbiegungseinstellwalze auch ohne weiteres als Unterwalze verwenden, wie dies in Fig. 2 dargestellt ist. Gleiche Elemente sind mit den gleichen Bezugszeichen versehen.

Es ist zu erkennen, daß der Entlüftungskanal 19, der nunmehr der obere Entlüftungskanal ist, eine Nut 24 anschneidet, in der eine Dichtungsanordnung aus einem ersten Dichtring 25 und einem zweiten Dichtring 26 angeordnet ist. Die Dichtungsanordnung aus den beiden Dichtringen 25, 26 wird vom Stützelement 5 aus gesehen radial komprimiert, also zwischen dem Stützelement 5 und dem Boden der Nut 24, und dichtet dadurch ab. In Bewegungsrichtung des Stützelements 5 gibt es jedoch zwischen der Nut 24 und den Dichtringen 25, 26 einen kleinen Spielraum, durch den zumindest die Luft aus dem Druckraum 10 in den Zwischenraum 14 zwischen dem Mantel 2 und dem Joch 4 treten kann. In der Regel wird auch ein kleiner Ölstrom hier austreten können.

Die in den Fig. 1 und 2 dargestellten Durchbiegungseinstellwalzen 1 werden in einem Walzenstapel verwendet, der unter einem Winkel von etwa 45° zur Vertikalrichtung angeordnet ist. Hier ist es relativ einfach, die jeweils höchste Stelle im Druckraum 10 "anzuzapfen".

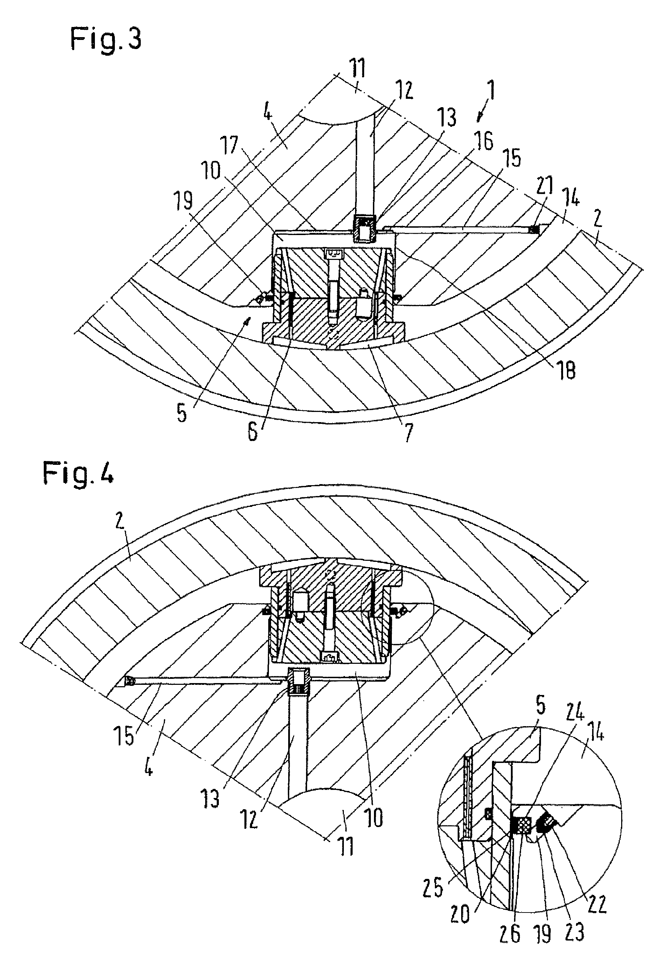

Die Fig. 3 und 4 zeigen entsprechende Durchbiegungseinstellwalze 1, die für eine Anordnung in einem vertikal stehenden Walzenstapel vorgesehen ist. Gleiche und einander entsprechende Elemente sind mit den gleichen Bezugszeichen wie in den Fig. 1 und 2 versehen.

Auch hier ist ein Entlüftungskanal 15 vorgesehen, der in Schwerkraftrichtung an der höchsten Stelle 16 des Druckraumes 8 mündet und zwar dort, wo die Umfangswand 18 und der Boden 17 des Druckraumes 10 zusammentreffen.

Die Wirkung ist die gleiche, wie bei der Ausgestaltung nach Fig. 1, d.h. Luft, die in den Druckraum 10 eingetragen wird, wird durch den Entlüftungskanal 15 permanent abgeführt, gegebenenfalls gemeinsam mit einem kleinen Ölstrom. Auch hier ist der Entlüftungskanal 15 unter einem kleinen Winkel zur Horizontalen nach oben in Richtung zum Zwischenraum 14 geneigt.

Auch bei der in Fig. 3 dargestellten Durchbiegungseinstellwalze ist ein weiterer Entlüftungskanal 19 vorgesehen, der zur Entlüftung verwendet wird, wenn die Walze als Unterwalze eingesetzt wird, wie dies in Fig. 4 dargestellt ist. Auch hier schneidet der Entlüftungskanal 19 die Nut 24 an, in der die Dichtringe 25, 26 zur Abdichtung des Druckraums 10 zum Zwischenraum 14 angeordnet sind.

## Patentansprüche

1. Durchbiegungseinstellwalze mit einem umlaufenden Walzenmantel, einem den Walzenmantel durchsetzenden undrehbaren Joch mit mindestens einem Stützelement zwischen dem Joch und dem Walzenmantel, das vom Druck in einem Druckraum beaufschlagt ist, der über eine Drosselanordnung mit einer Zuführleitung verbunden ist, **dadurch gekennzeichnet, daß** der Druckraum (10) im Bereich seiner in Schwerkraftrichtung höchsten Stelle (16, 20) mit einem Entlüftungskanal (15, 19) verbunden ist.

2. Walze nach Anspruch 1, **dadurch gekennzeichnet, daß** der Entlüftungskanal (15, 19) in einem Zwischenraum (14) zwischen dem Walzenmantel (2) und dem Joch (4) mündet.

3. Walze nach Anspruch 1 oder 2, **dadurch gekennzeichnet, daß** der Entlüftungskanal (15, 19) eine Drossel (23) aufweist.

4. Walze nach Anspruch 3, **dadurch gekennzeichnet, daß** die Drossel (23) in einem Drosseleinsatz (21, 22) angeordnet ist.

5. Walze nach Anspruch 4, **dadurch gekennzeichnet, daß** der Drosseleinsatz (21, 22) im Bereich eines Endes des Entlüftungskanals (15, 19) angeordnet ist, das vom Druckraum (10) entfernt ist.

6. Walze nach einem der Ansprüche 3 bis 5, **dadurch gekennzeichnet, daß** die Drossel (23) einen Drosselwiderstand für Hydraulikflüssigkeit aufweist, der um einen Faktor im Bereich von 50 bis 250 größer ist als ein Drosselwiderstand der Drosselanordnung (13) für Hydraulikflüssigkeit.

7. Walze nach einem der Ansprüche 1 bis 6, **dadurch gekennzeichnet, daß** der Druckraum (10) im Bereich seiner höchsten Stelle (16) mit einem oberen Entlüftungskanal (15) und im Bereich seiner in Schwerkraftrichtung tiefsten Stelle (20) mit einem unteren Entlüftungskanal verbunden ist.

8. Walze nach einem der Ansprüche 1 bis 7, **dadurch gekennzeichnet, daß** der Entlüftungskanal (15) an einer Position (16) in den Druckraum (10) mündet, an der zwei Begrenzungswände (17, 18) des Druckraums (10) unter einem Winkel zusammentreffen.

9. Walze nach einem der Ansprüche 1 bis 7, **dadurch gekennzeichnet, daß** der Entlüftungskanal (19) eine Nut (24) anschneidet, in der eine Dichtung (25, 26) zwischen dem Stützelement (5) und dem Joch (4) angeordnet ist.

10. Walze nach einem der Ansprüche 1 bis 9, **dadurch gekennzeichnet, daß** die Zuführleitung (12) außermittig in den Druckraum (10) mündet und der Entlüftungskanal (15) an der Mündung der Zuführleitung (12) benachbart angeordnet ist.

11. Walze nach einem der Ansprüche 1 bis 10, **dadurch gekennzeichnet, daß** das Stützelement (5) eine von der Vertikalen abweichende Wirkrichtung aufweist und in einer zylinderförmigen Bohrung im Joch (4) angeordnet ist, wobei der Entlüftungskanal (15) im Zenit der Bohrung mündet.
